# EUROPÄISCHE PATENTSCHRIFT

(11) **EP 1 275 603 B1**
(45) Veröffentlichungstag und Bekanntmachung des Hinweises auf die Patenterteilung: **17.03.2004**
(21) Anmeldenummer: 02405504.8
(22) Anmeldetag: 19.06.2002
(51) Int. Cl.: B65G 47/51

(54) **Speichervorrichtung**
Accumulator
Accumulateur

(30) Priorität: 26.06.2001 CH 11672001
(43) Veröffentlichungstag der Anmeldung: 15.01.2003
(73) Patentinhaber: SIG Pack Systems AG, 8222 Beringen (CH)
(72) Erfinder: Wipf, Alfred, 79798 Jestetten (DE)
(74) Vertreter: Clerc, Natalia

(56) Entgegenhaltungen:
- EP-A- 0 581 143
- DE-A- 3 225 714
- DE-A- 19 856 649
- FR-A- 2 810 653
- US-A- 4 413 724
- US-A- 5 772 005
- US-A- 6 152 291

## Beschreibung

### Technisches Gebiet

Die Erfindung betrifft eine Speichervorrichtung zum Speichern von entlang einer Förderstrecke von einer Eingangsstation zu einer Ausgangsstation geförderten Gütern gemäss Oberbegriff des Patentanspruches 1.

### Stand der Technik

Eine gattungsgemässe Speichervorrichtung ist aus US-A-4'413'724 bzw. aus DE-A 3 225 714 bekannt. Ein Förderband ist schlaufenförmig um mehrere in einer Förderebene angeordnete Umlenkrollen geführt. Einige der Umlenkrollen sind paarweise auf Schlitten angeordnet, welche in der Förderebene verschiebbar sind. Dadurch lassen sich Speicher- und Leertrums bilden, wobei deren Länge und somit die Kapazität des Speichers durch Verschieben der Schlitten veränderbar ist. Diese Speichervorrichtung benötigt relativ viel Platz.

DE-A-42'24'609 beschreibt eine Fördervorrichtung für Zigarren, bei welcher ein Förderband in zwei konzentrischen, mit gleicher Steigung um eine gemeinsame vertikale Achse herum angeordnete Wendel gefördert ist. Zum Verändern der Länge der Förderstrecke ist ein die beiden Wendel verbindendes und somit die Förderstrecke überbrückendes Brückenelement vorhanden, welches relativ zu den beiden Wendeln verfahrbar ist. Die wendelförmige Anordnung spart zwar Platz. Nachteilig ist jedoch der benötigte Bandübergang, welcher stets das Risiko birgt, dass Lage und gegenseitiger Abstand der transportierten Güter verändert wird.

Weitere Speichervorrichtungen, welche jedoch alle auch Bandübergänge aufweisen, sind beispielsweise aus DE-A-198'56'649, US-A-6'152'291, US-A-4'549'647 und CH-A-690'646 bekannt. Ergänzend wird noch auf die Speichervorrichtung FR-A-2 810 653 hingewiesen. Sie ist platzsparend, benötigt aber zwei Schlitten für die Umlenkrollen.

### Darstellung der Erfindung

Es ist deshalb Aufgabe der Erfindung, eine verbesserte Speichervorrichtung der eingangs genannten Art zu schaffen, welche platzsparend ist und trotzdem keine Bandübergänge benötigt.

Diese Aufgabe löst eine Speichervorrichtung mit den Merkmalen des Patentanspruches 1.

Die erfindungsgemässe Speichervorrichtung weist einen entlang einer Förderebene verschiebbaren Schlitten mit Umlenkungsrollen zur Unterteilung eines endlosen Fördermittels in ein Speichertrum und ein Leertrum auf. Erfindungsgemäss sind erste Umlenkungsmittel vorhanden, welche das Leertrum aus der Förderebene in eine beabstandet dazu parallel verlaufende Ebene umlenken, und zweite Umlenkungsmittel, um das umgelenkte Leertrum wiederum in diese oder eine andere Förderebene in ein Speichertrum überzuführen.

Da das Leertrum somit auf der Förderebene und quasi auf deren Rückseite verläuft, wird bei maximaler Speicherkapazität in der Förderebene kein zusätzlicher Platz für das Leertrum benötigt. Ferner ermöglicht diese Anordnung eine hohe Flexibilität in der geometrischen Gestaltung der Speichervorrichtung. Insbesondere lässt sich die Speichervorrichtung in einer Ebene oder schraubenförmig anordnen. Vorteilhaft ist ferner, dass auch bei einer schraubenförmigen Anordnung keine Bandübergänge notwendig sind.

In einer bevorzugten Ausführungsform ist das Fördermittel eine endlose Plattenkette. Diese weist den Vorteil auf, dass sich auf ihr Kavitäten zur Aufnahme von zu transportierenden Stückgütern anordnen lassen. Zudem ermöglicht sie eine einfache Führung.

In einer weiteren bevorzugten Ausführungsform ist das Fördermittel, vorzugsweise eine Plattenkette, im Bereich der Umlenkungsrollen nur einseitig geführt, um die Umlenkung zu vereinfachen, so dass mit grösseren Geschwindigkeiten gefahren werden kann.

Weitere vorteilhafte Ausführungsformen gehen aus den abhängigen Patentansprüchen hervor.

### Kurze Beschreibung der Zeichnungen

Im folgenden wird der Erfindungsgegenstand anhand von bevorzugten Ausführungsbeispielen, welche in den beiliegenden Zeichnungen dargestellt sind, erläutert. Es zeigen:
- Figur 1: eine Draufsicht auf eine Speichervorrichtung gemäss der Erfindung in einer ersten Speicherposition;
- Figur 2: die Speichervorrichtung gemäss Figur 1 in einer zweiten Speicherposition;
- Figur 3: eine Draufsicht der erfindungsgemässen Speichervorrichtung in einer zweiten Ausführungsform;
- Figur 4: einen Querschnitt durch eine Führung gemäss Figur 1 entlang A-A;
- Figur 5: einen Querschnitt durch die Führung gemäss Figur 1 entlang B-B;
- Figur 6: einen Querschnitt durch eine Führung eines Fördermittels in einer zweiten Ausführungsform und
- Figur 7: einen Querschnitt durch eine Führung eines Fördermittels in einer dritten Ausführungsform.

### Wege zur Ausführung der Erfindung

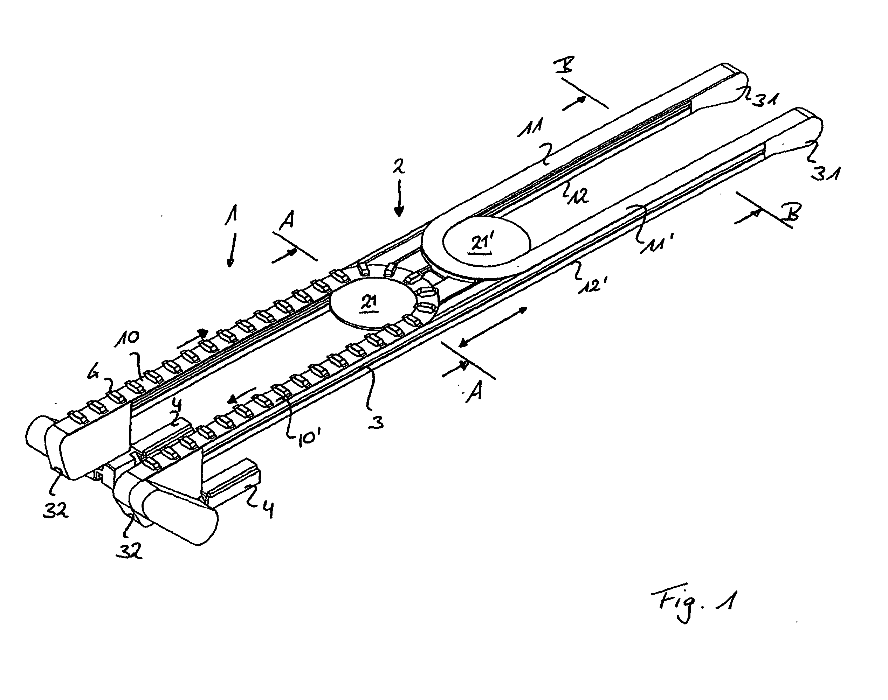

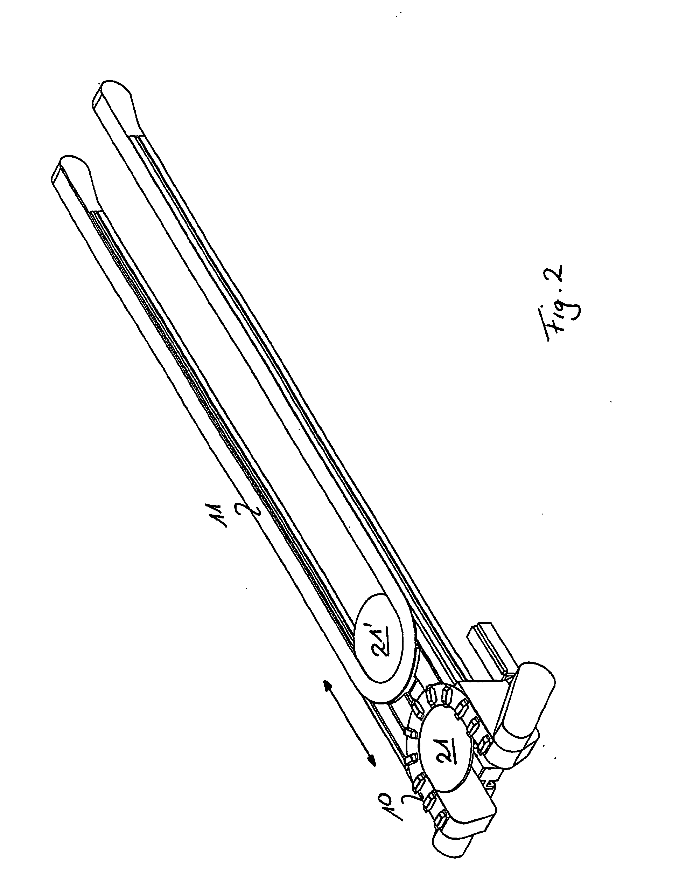

Die Figuren 1 und 2 zeigen eine erfindungsgemässe Speichervorrichtung in einer ersten Ausführungsform. Auf einem horizontal angeordneten Trägerrahmen 3 mit zwei parallel zueinander verlaufenden Trägerelementen 30 ist ein einziges, endloses und flexibles Fördermittel 1, beispielsweise ein Förderband oder eine Plattenkette, angeordnet. Dieses Fördermittel 1 transportiert Stückgüter G von einer hier nicht dargestellten Eingangsstation zu einer ebenfalls nicht dargestellten Ausgangsstation. Die Eingangsstation ist beispielsweise mit einer Produktionsstätte, die Ausgangsstation mit einer Verpackungseinheit verbunden.

Im Trägerrahmen 3 ist ein Schlitten 2 entlang einer Geraden verschiebbar gelagert. Die Verschiebbarkeit ist in den Figuren 1 und 2 mit einem doppelseitigen Pfeil gekennzeichnet. Auf einer oberen Seite des Schlitten 2 sind zwei Umlenkrollen 21, 21' angeordnet, um welche das Fördermittel 1 geführt ist. Dadurch ist das Fördermittel 1 auf dieser oberen Seite in zwei Schlaufen unterteilt, welche eine gemeinsame Förderebene bilden. Eine erste Schlaufe bildet ein Speichertrum, die zweite Schlaufe bildet einen Teil eines Leertrums. Die Bewegungsrichtung des Fördermittels 1 und somit die Förderrichtung ist mit einfachen Pfeilen dargestellt. Vorzugsweise sind auf dem Schlitten 2 Mittel zur Spannung des Fördermittels 1 vorhanden. Beispielsweise lassen sich die Umlenkrollen 21, 21' gegenseitig gefedert lagern.

Wie in Figur 1 erkennbar ist, unterteilt die erste Umlenkrolle 21 das Speichertrum in ein eingangsseitiges Speichertrum 10 und ein ausgangsseitiges Speichertrum 10'. Die zweite Umlenkrolle 21' unterteilt das Leertrum in ein eingangsseitiges oberes Leertrum 11 und ein ausgangsseitiges oberes Leertrum 11'. Dadurch sind das Speichertrum und das Leertrum in der Förderebene in zwei parallel zueinander verlaufende und gegenläufig betriebene Abschnitte unterteilt.

Je ein erstes Umlenkungsmittel 31 lenkt je ein oberes Leertrum 11, 11' um den Trägerrahmen 3 herum in eine parallel und beabstandet zur Förderebene verlaufende Ebene um, wo sie als umgelenkte, untere Leertrum 12, 12' entlang der gesamten Unterseite des Trägerrahmens 3 laufen. In einer anderen, hier nicht dargestellten Ausführungsform ist der Trägerrahmen in einem Winkel zur Horizontalen oder vertikal ausgerichtet, so dass das Leertrum auf die Rückseite des Trägerrahmens 3 umgelenkt ist. Das umgelenkte Leertrum 12, 12' ist über zweite Umlenkungsmittel 32 in das Speichertrum 10,10' übergeführt.

Die ersten und/oder zweiten Umlenkungsmittel 31,32 sind motorisch angetrieben. In dem hier dargestellten Beispiel sind es die zweiten Umlenkungsmittel 32, wobei die zwei Umlenkungsmittel 32 je mit einem Motor 4 wirkverbunden sind, so dass der eingangsseitige und der ausgangsseitige Bereich des Fördermittels 1 unabhängig voneinander antreibbar sind. Der Antrieb erfolgt im allgemeinen über eine den Förderprozess steuernde, mit der Eingangs- und Ausgangsstation in kommunikativer Verbindung stehende Steuereinheit. Werden die Bereiche unterschiedlich angetrieben, so wird der Schlitten 2 entweder zur Eingangs- oder zur Ausgangsstation gefahren. Dadurch verändert sich die Länge des Speichertrums 10, 10' und somit die Speicherkapazität der Speichervorrichtung. In Figur 1 ist der Speicher halb ausgenützt, in Figur 2 wird er minimal benötigt.

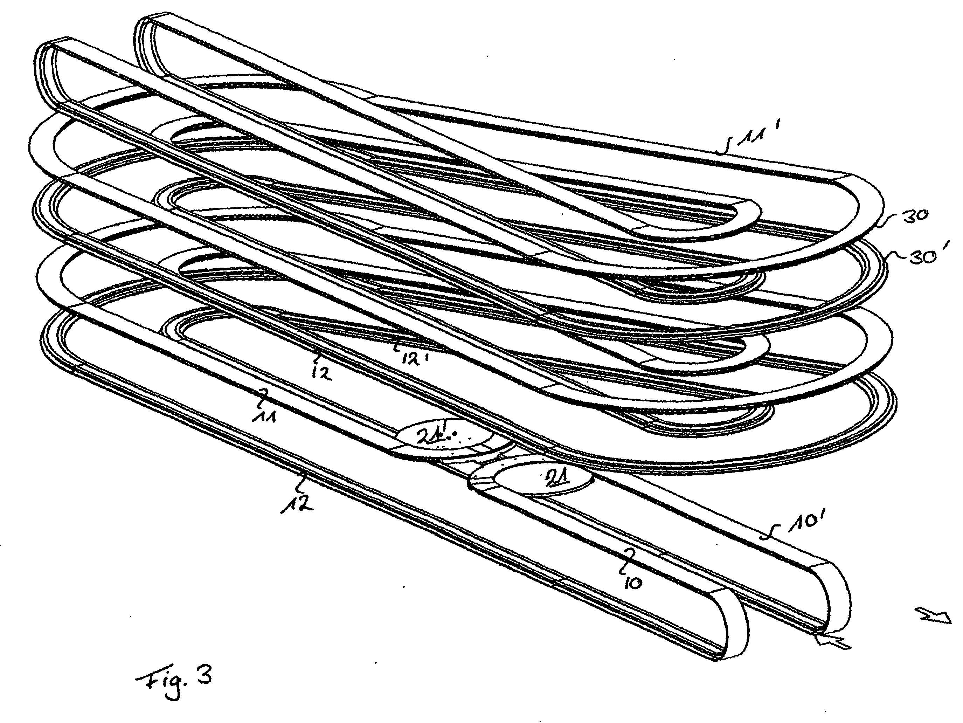

In Figur 3 ist eine zweite Ausführungsform der erfindungsgemässen Vorrichtung dargestellt. Hier ist der Trägerrahmen 3 schraubenförmig gewunden, wobei wiederum das schlaufenförmige Speichertrum 10, 10' auf zwei parallel zueinander verlaufenden oberen Trägerelementen 30 gelagert ist und das untere umgelenkte Leertrum 12, 12' auf zwei ebenfalls parallel zueinander verlaufenden unteren Trägerelementen 30' verläuft. Die Anordnung der Trägerelemente 30,30' ist vorzugsweise derart, dass unterhalb jedem oberen Trägerelement 30 ein unteres Trägerelement 30' in gleichbleibendem Abstand angeordnet ist. Der Trägerrahmen 3 kann auch so ausgebildet sein, dass je ein oberes und ein unteres Trägerelement 30,30' einstückig ausgebildet sind. Zudem können die zwei oberen und/oder die zwei unteren Trägerelemente 30, 30' miteinander verbunden sein, solange für die Verschiebung des Schlittens 2 genügend Platz bleibt.

Vorzugsweise ist das Fördermittel 1 mindestens in der Förderebene, vorzugsweise jedoch über mindestens annähernd die gesamte Laufstrecke des Fördermittels 1 mindestens zweifach geführt gelagert. Im Bereich der Umlenkungsrollen 21, 21' ist das Fördermittel 1 jedoch aus mindestens einer dieser Führungen entlassen, um eine Loslösung von den Trägerelementen 30 und eine vereinfachte Umlenkung zu ermöglichen.

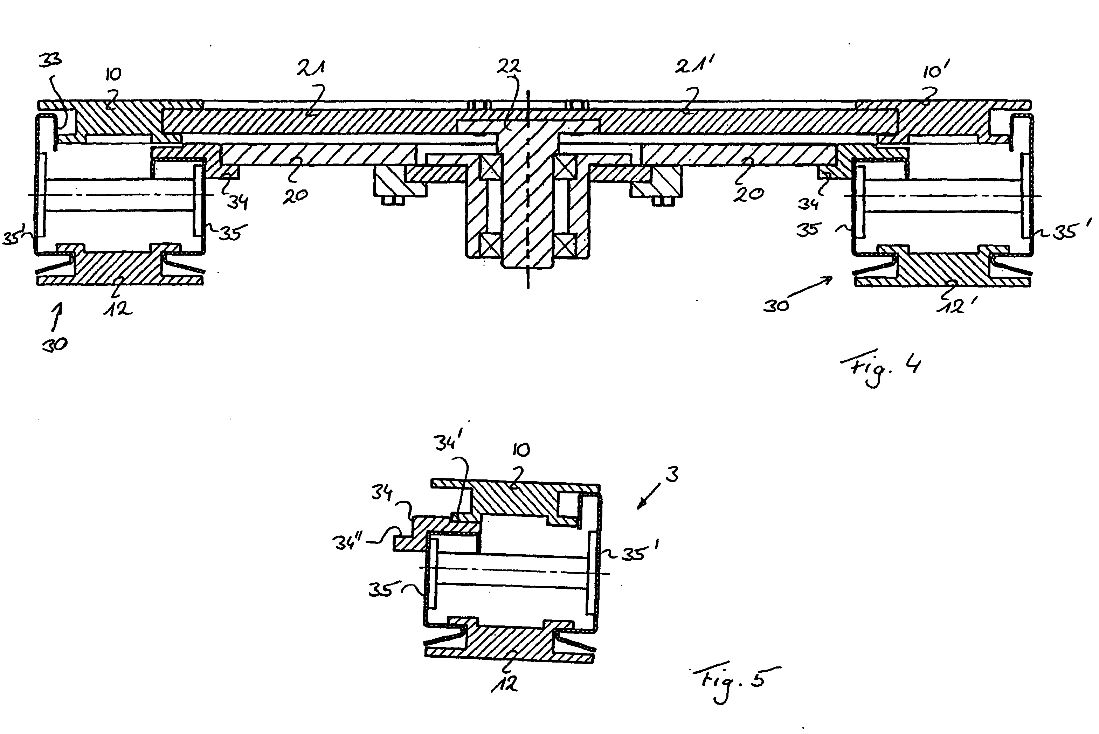

Eine bevorzugte Ausführungsform für diese Führung ist in den Figuren 4 und 5 dargestellt. Das Fördermittel 1, hier eine Plattenkette, ist gemäss Figur 5 beidseitig im Trägerrahmen 3 geführt. Der Trägerrahmen ist auf seiner dem Schlitten 2 zugewandten inneren Seite mit einer stufenförmigen Auflage 34 versehen. Die Auflage 34 erstreckt sich mindestens annähernd über die gesamte Länge des Trägerrahmens 3, wobei sie durchgehend oder unterbrochen sein kann. Das eingangsseitige Speichertrum 10 liegt auf einer ersten Stufe 34' auf. Selbstverständlich liegen auch das ausgangsseitige Speichertrum 10' und die oberen Leertrums 11, 11' auf der ersten Stufe 34' auf. Vorzugsweise weist die Auflage 34 eine zweite Stufe 34'' auf, auf welcher der Schlitten 2 mit einer Trägerplatte 20 aufliegt und geführt ist.

Der Trägerrahmen 3 ist auf seiner dem Schlitten 2 abgewandten Aussenseite mit einer seitlichen Führung 33 versehen. In dem in den Figuren 4 und 5 dargestellten Ausführungsbeispiel ist der Trägerrahmen 3 beidseitig mit einem Abdeckblech 35,35' versehen, wobei ein äusseres Abdeckblech 35' am oberen Ende rechteckförmig gebogen ist, so dass die Plattenkette an ihrer Plattenunterseite an einem ersten Schenkel des Abdeckblechs 35' ansteht und auf einem zweiten Schenkel des Abdeckblechs 35' aufliegt. Auf dem zweiten Abdeckblech 35 ist die stufenförmige Auflage 34 angeordnet. Die unteren Enden der zwei Bleche 35,35' sind vorzugsweise winklig gebogen, so dass sie in seitliche Nuten 13 der Plattenkette eingreifen und diese somit führen und lagern. Andere Formen der seitlichen Lagerung des oberen Trums und der Lagerung und Führung des unteren Trums sind möglich.

Gelangt eine Platte der Plattenkette 1 zum Schlitten 2, so greift, wie in der Figur 4 dargestellt ist, eine der Umlenkrollen 20 oder 21 in die innere seitliche Nut 13 der Platte ein und hebt die Platte und somit das Fördermittel 1 über eine Kante der stufenförmigen Auflage 34 und entlässt diese Führung.

In Figur 6 ist eine weitere Art der Führung des oberen Trums dargestellt. Das untere Trum kann gleich oder verschiedenartig, beispielsweise wie oben beschrieben, geführt und gelagert sein. Das obere Trum, hier wiederum durch das eingangsseitige Speichertrum 10 vertreten, ist auf einer Auflageplatte 36 gelagert. Die Auflageplatte 36 weist auf ihrer äusseren Seite eine seitliche Führung 36' aufweist, in welche ein unterer Schenkel 14 der Platte eingreift. Auf der inneren Seite ist am Trägerrahmen 3 ebenfalls eine seitliche, abschnittweise absenkbare Führung 37 angeordnet. Vorzugsweise ist diese Führung durch einzelne vertikal aufstehende, gefederte Zähne gebildet, welche sich mittels einer am Schlitten 2 angebrachten Nase absenken lassen. Auch hier greift die Umlenkrolle 21, 21' wiederum in die Nut 13 der Platte ein, braucht sie aber nicht aus der Förderebene hochzuheben.

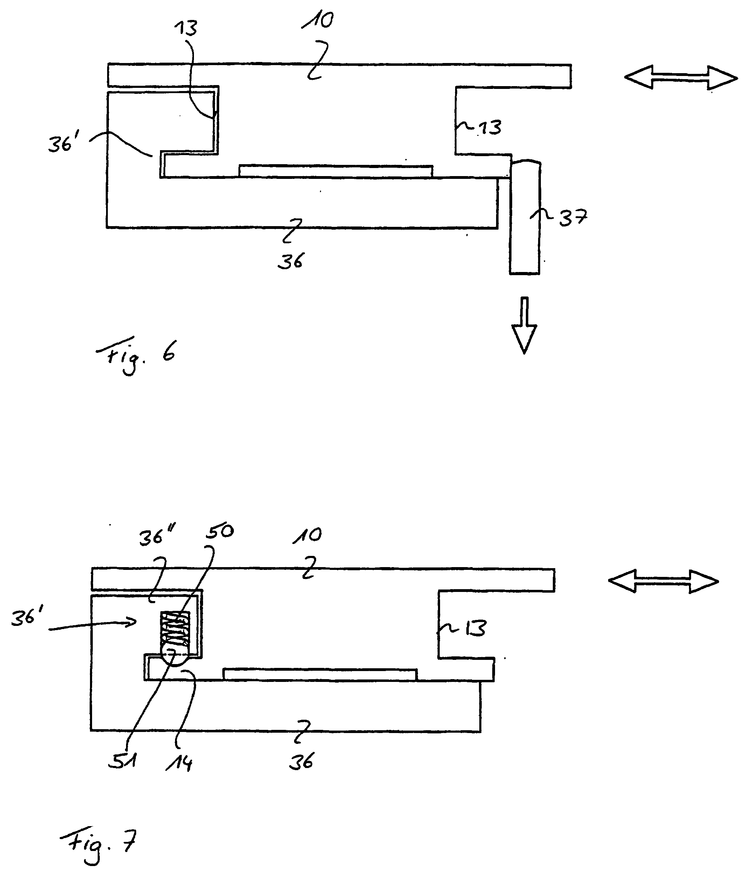

In Figur 7 ist eine weitere Ausführungsform der Führung des oberen Trums dargestellt. Auch hier ist aussenseitig eine seitliche Führung 36' vorhanden. Innenseitig ist keine Führung vorhanden. Eine präzise Führung wird jedoch dadurch erreicht, dass in einem oberen Schenkel 36'' der Führung 36' ein Federelement 50 angeordnet ist, welches den unteren Schenkel 14 der Platte auf die Auflagefläche der Auflageplatte 36 drückt. Vorzugsweise ist der untere Schenkel 14 über eine Kugel 51 mit dem Federelement 50 wirkverbunden. Im Bereich des Schlittens wird die Federwirkung mechanisch oder elektronisch deaktiviert, so dass die Platte wiederum aus der Führung 36'ausfahrbar ist.

Die erfindungsgemässe Vorrichtung ermöglicht dank der rückseitigen Führung des Leertrums eine platzsparende und leistungsfähige Speicherung ohne Bandübergänge.

### Bezugszeichenliste

- 1: Fördermittel
- 10: eingangsseitiges Speichertrum
- 10': ausgangsseitiges Speichertrum
- 11: eingangsseitiges oberes Leertrum
- 11': ausgangsseitiges oberes Leertrum
- 12: eingangsseitiges unteres Leertrum
- 12': ausgangsseitiges unteres Leertrum
- 13: Nut
- 14: unterer Schenkel
- 2: Schlitten
- 20: Trägerplatte
- 21: erste Umlenkrolle
- 21': zweite Umlenkrolle
- 22: Radlagerung
- 3: Trägerrahmen
- 30: oberes Trägerelement
- 30': unteres Trägerelement
- 31: erste Umlenkmittel
- 32: zweite Umlenkmittel
- 33: seitliche Führung
- 34: stufenförmige Auflage
- 34': erste Stufe
- 34'': zweite Stufe
- 35: inneres Abdeckblech
- 35': äusseres Abdeckblech
- 36: Auflageplatte
- 36': Führung
- 36'': oberer Schenkel
- 37: innere seitliche Führung
- 4: Motor
- 50: Federelement
- 51: Kugellager
- G: Stückgut

## Patentansprüche

1. Speichervorrichtung zum Speichern von entlang einer Förderstrecke von einer Eingangsstation zu einer Ausgangsstation geförderten Gütern (G)
mit einem flexiblen Fördermittel (1), wobei das Fördermittel (1) aus einem Speichertrum (10,10') und einem Leertrum (11,11',12,12') besteht, wobei das Speichertrum (10,10') und mindestens ein Teil des Leertrums (11,11') in mindestens einer gemeinsamen Förderebene verlaufen und wobei das Speichertrum (10,10') und der mindestens eine Teil des Leertrums (11,11') in dieser mindestens einen gemeinsamen Förderebene je zwei in einer Förderrichtung parallel zueinander verlaufende und gegenläufig betriebene Abschnitte aufweisen,
mit einem in der Förderebene verschiebbaren Schlitten (2) zur Veränderung einer Speicherkapazität der Speichervorrichtung, wobei der Schlitten (2) eine erste Umlenkungsrolle (21) zur Umlenkung des Speichertrums (10,10') und eine zweite Umlenkungsrolle (21') zur Umlenkung des Leertrums (11,11') in der mindestens einen Förderebene aufweist und
mit ersten und zweiten Umlenkungsmitteln (31,32) zur Umlenkung des Fördermittels (1),
**dadurch gekennzeichnet, dass**
die ersten Umlenkungsmittel (31) das Leertrum (11,11') aus einer der mindestens einen Förderebene in eine beabstandet dazu parallel verlaufende Ebene umlenken und dass
die zweiten Umlenkungsmittel (32) das umgelenkte Leertrum (12,12') in das Speichertrum (10,10') überführen.

2. Speichervorrichtung nach Anspruch 1, **dadurch gekennzeichnet, dass** der Schlitten (2) entlang einer Geraden verschiebbar ist.

3. Speichervorrichtung nach Anspruch 1, **dadurch gekennzeichnet, dass** der Schlitten (2) entlang einer schraubenlinienförmigen Bahn verschiebbar ist.

4. Speichervorrichtung nach Anspruch 1, **dadurch gekennzeichnet, dass** die ersten und/oder die zweiten Umlenkungsmittel (31,32) motorisch angetrieben sind.

5. Speichervorrichtung nach Anspruch 4, **dadurch gekennzeichnet, dass** ein eingangsseitiges und ein ausgangsseitiges erstes beziehungsweise zweites Umlenkmittel (31,32) vorhanden sind, wobei das eingangs- und das ausgangsseitige Umlenkmittel (31,32) unabhängig voneinander angetrieben sind.

6. Speichervorrichtung nach Anspruch 1, **dadurch gekennzeichnet, dass** das Fördermittel (1) eine Plattenkette ist.

7. Speichervorrichtung nach Anspruch 1, **dadurch gekennzeichnet, dass** das Fördermittel (1) in der mindestens einen Förderebene mindestens zweifach geführt ist, wobei das Fördermittel (1) im Bereich der Umlenkrollen (21,21') aus mindestens einer dieser Führungen entlassen ist.

8. Speichervorrichtung nach Anspruch 7, **dadurch gekennzeichnet, dass** das Fördermittel (1) auf einer stufenförmigen Auflage (34) geführt ist, wobei das Fördermittel (1) im Bereich der Umlenkrollen (21,21') über eine Kante einer Stufe (34') anhebbar ist.

9. Speichervorrichtung nach Anspruch 7, **dadurch gekennzeichnet, dass** das Fördermittel (1) auf einer Seite in einer Führung (36') gelagert ist und auf der anderen Seite an eine im Bereich der Umlenkrollen (21,21') absenkbare Seitenführung (37) angrenzt.

10. Speichervorrichtung nach Anspruch 1, **dadurch gekennzeichnet, dass** das Fördermittel (1) in einer Führung (36') gelagert ist, wobei es gefedert auf eine Auflagefläche gedrückt ist und wobei im Bereich der Umlenkungsrollen (21,21') die Federwirkung aufgehoben ist.

## Claims

1. A storage apparatus for storing goods (G) conveyed along a conveying section from an entry station to an exit station,
having a flexible conveying means (1), it being the case that the conveying means (1) consists of a storage strand (10, 10') and an idle strand (11, 11', 12, 12'), wherein the storage strand (10, 10') and at least one part of the idle strand (11, 11') run in at least one common conveying plane, and wherein the storage strand (10, 10') and the least one part of the idle strand (11, 11'), in this at least one common conveying plane, have in each case two portions which run parallel to one another in a conveying direction and are operated in opposite directions, having a carriage (2) which can be displaced in the conveying plane and is intended for changing a storage capacity of the storage apparatus, wherein the carriage (2) has a first deflecting roller (21) for deflecting the storage strand (10, 10'), and a second deflecting roller (21') for deflecting the idle strand (11, 11'), in the at least one conveying plane, and
having first and second deflecting means (31, 32) for deflecting the conveying means (1),
**characterized in that**
the first deflecting means (31) deflect the idle strand (11, 11') from the at least one conveying plane into a parallel plane spaced apart therefrom, and that
the second deflecting means (32) transfer the deflected idle strand (12, 12') into the storage strand (10, 10').

2. The storage apparatus as claimed in claim 1, **characterized in that** the carriage (2) can be displaced along a straight line.

3. The storage apparatus as claimed in claim1, **characterized in that** the carriage (2) can be displaced along a helical path.

4. The storage apparatus as claimed in claim 1, **characterized in that** the first and/or the second deflecting means (31, 32) are motor-driven.

5. The storage apparatus as claimed in claim 4, **characterized in that** there are provided a first and second deflecting means (31, 32) on the entry side and exit side, the entry-side and the exit-side deflecting means (31, 32) being driven independently of one another.

6. The storage apparatus as claimed in claim 1, **characterized in that** the conveying means (1) is a plate link chain.

7. The storage apparatus as claimed in claim 1, **characterized in that** the conveying means (1) is guided at least two locations in the at at least one conveying plane, the conveying means (1) is released from at least one of theses guides (21, 21') in the region of the deflecting rollers.

8. The storage apparatus as claimed in claim 7, **characterized in that** the conveying means (1) is guided on a stepped support (34), it being possible for the conveying means (1) to be raised above an edge of a step (34') in the region of the deflecting rollers (21, 21').

9. The storage apparatus as claimed in claim 7, **characterized in that** the conveying means (1) is mounted in a guide (36') on one side and, on the other side, is adjacent to a side guide (37) which can be lowered in the region of the deflecting rollers (21, 21').

10. The storage apparatus as claimed in claim 1, **characterized in that** the conveying means (1) is mounted in a guide (36'), it being forced by a spring onto a support surface, and the spring action being eliminated in the region of the deflecting rollers (21, 21').

## Revendications

1. Accumulateur pour stocker des produits (G) transportés le long d'un circuit de transport à partir d'une station d'entrée vers une station de sortie avec un moyen de transport flexible (1), le moyen de transport (1) étant constitué d'un espace de stockage (10, 10') et d'un espace vide (11, 11', 12, 12'), l'espace de stockage (10, 10') et au moins une partie de l'espace vide (11, 11') évoluant dans au moins un plan de transport commun et l'espace de stockage (10, 10') et au moins la partie de l'espace vide (11, 11') dans au moins ce plan de transport commun présentant chacun deux segments évoluant dans une direction du transport parallèlement l'un par rapport à l'autre et entraînés en sens opposé, avec un chariot (2) pouvant coulisser dans le plan de transport pour modifier une capacité de stockage de l'accumulateur, le chariot (2) comportant un premier rouleau de déviation (21) pour dévier l'espace de stockage (10, 10') et un deuxième rouleau de déviation (21') pour dévier l'espace vide (11, 11') dans ce plan de transport au moins et avec des premiers et deuxièmes moyens de déviation (31, 32) pour dévier le moyen de transport (1), **caractérisé en ce que** les premiers moyens de déviation (31) dévient l'espace vide (11, 11') à partir d'un plan de transport au moins vers un plan espacé parallèle, et **en ce que** les deuxièmes moyens de déviation (32) ramènent l'espace vide (12, 12') dévié vers l'espace de stockage (10, 10').

2. Accumulateur selon la revendication 1, **caractérisé en ce que** le chariot (2) peut coulisser le long d'une droite.

3. Accumulateur selon la revendication 1, **caractérisé en ce que** le chariot (2) peut coulisser le long d'une trajectoire hélicoïdale.

4. Accumulateur selon la revendication 1, **caractérisé en ce que** les premiers et/ou deuxièmes moyens de déviation (31, 32) sont entraînés par moteur.

5. Accumulateur selon la revendication 4, **caractérisé en ce qu'**un premier et respectivement deuxième moyen de déviation (31, 32) se trouvent du côté de l'entrée et du côté de la sortie, les moyens de déviation (31, 32) du côté de l'entrée et du côté de la sortie étant entraînés indépendamment l'un de l'autre.

6. Accumulateur selon la revendication 1, **caractérisé en ce que** le moyen de transport (1) est une chaîne de plaques.

7. Accumulateur selon la revendication 1, **caractérisé en ce que** le moyen de transport (1) est guidé au moins deux fois dans le plan de transport au moins, le moyen de transport (1) étant dégagé d'au moins un de ces guidages dans le périmètre des rouleaux de déviation (21, 21').

8. Accumulateur selon la revendication 7, **caractérisé en ce que** le moyen de transport (1) est guidé sur un appui en forme de marche (34), le moyen de transport (1) pouvant être relevé sur une arête d'une marche (34') dans le périmètre des rouleaux de déviation (21, 21').

9. Accumulateur selon la revendication 7, **caractérisé en ce que** le moyen de transport (1) repose sur une face dans un guidage (36') et que sur l'autre face, il jouxte un guidage latéral (37) escamotable vers le bas dans le périmètre des rouleaux de déviation (21, 21').

10. Accumulateur selon la revendication 1, **caractérisé en ce que** le moyen de transport (1) repose dans un guidage (36') en étant appuyé par ressort sur une surface de support et l'action du ressort étant supprimée dans le périmètre des rouleaux de déviation (21, 21').
